# FASCICULE DE BREVET EUROPEEN

(11) **EP 3 625 489 B1**
(45) Date de publication et mention de la délivrance du brevet: **18.08.2021**
(21) Numéro de dépôt: 18725184.8
(22) Date de dépôt: 15.05.2018
(51) Int. Cl.: F16K 15/06, F16K 15/20, B60C 23/04, F16K 17/06, B60C 29/02

(54) **VALVE DE GONFLAGE POUR PNEU AMELIOREE**
VERBESSERTES AUFBLASVENTIL FÜR REIFEN
IMPROVED INFLATION VALVE FOR TYRE

(30) Priorité: 16.05.2017 FR 1754289; 07.07.2017 FR 1756476
(43) Date de publication de la demande: 25.03.2020
(73) Titulaire: Schrader, 25300 Pontarlier (FR)
(72) Inventeur: PUPPIS, Jérôme, 90120 Meziré (FR); GRESSET, Benoit, 39600 Arbois (FR); ROBERT, Sébastien, 25000 Besançon (FR)
(74) Mandataire: Novagraaf Technologies
(86) Numéro de dépôt international: PCT/EP2018/062563
(87) Numéro de publication internationale: WO 2018/210836

(56) Documents cités:
- WO-A1-2016/174323
- GB-A- 563 633
- US-A- 4 475 578

## Description

L'invention concerne une valve de gonflage pour pneu, de type destiné à gonfler un pneumatique de type tubeless (terminologie anglo-saxonne pour « sans chambre à air »). Cette valve de gonflage est dite « tubeless » ou encore « TPMS » (pour « Tire Pressure Monitoring System » selon la terminologie anglo-saxonne) si elle comporte un système de surveillance de la pression du pneu avec un capteur associé à ladite valve. Elle est de type « snap-in » si elle est boutonné ou encliquetée sur la jante ou de type « clamp-in » si elle est vissée sur la jante.

On connaît des exemples de valve décrits dans les documents WO2016/174323A, GB563633A, US4475578A.

Actuellement, les valves de gonflage pour pneu sont au minimum en deux parties que sont le corps de valve et le mécanisme de valve. Le mécanisme de valve comporte le clapet et son siège associé, permettant le contrôle et l'ajustement de la pression au sein du pneu. Il est monté rapporté, de manière généralement vissée, au niveau de l'extrémité externe du corps de valve, extrémité externe qui accessible à l'extérieur du pneu. De tels montages sont décrits dans le document EP 0 958 947 par exemple. Un inconvénient d'un tel montage assemblé vient du fait que les dimensions extérieures de l'extrémité externe du corps de valve sont contraintes par une norme et que le mécanisme de valve vissé impose la présence d'un taraudage au sein de ladite extrémité externe : par conséquent, l'épaisseur de matière du corps de valve est réduit et donc la résistance mécanique du corps de valve, du moins au niveau de son extrémité externe où se situe le mécanisme de valve rapporté vissé. Cela introduit des risques de défaillance de la valve. En effet, une casse de l'extrémité externe du corps de valve ne permet plus de garantir une étanchéité du volume sous pression qu'est le pneu selon deux modes de défaillance :
- Une perte d'étanchéité immédiate, le pneumatique se dégonfle et le véhicule s'en retrouve immobilisé ;
- Le mécanisme de valve reste en place, malgré la casse de l'extrémité externe du corps de valve, mais son maintien est fortement compromis. Le pneumatique peut fonctionner normalement mais la perte d'étanchéité et la vidange plus ou moins rapide peuvent intervenir de façon aléatoire à la moindre sollicitation sur le mécanisme de valve (par exemple des vibrations de roulage) et donc mettre en danger le ou les utilisateurs du véhicule.

Un but de l'invention est de fournir une valve de gonflage pour pneu qui ne présente pas les inconvénients précédents.

A cette fin, il est prévu, selon l'invention, une valve de gonflage pour pneu comportant une tubulure définissant un passage et ayant une extrémité interne et une extrémité externe, un mécanisme de valve positionnée dans le passage, le mécanisme de valve comportant un clapet et un siège agencés de sorte à coopérer de manière étanche l'un avec l'autre caractérisé en ce que le siège est agencé sur la tubulure dans le passage..

Ainsi, en prévoyant le siège du mécanisme de valve sur le corps de valve, il n'est plus nécessaire d'avoir un corps de mécanisme rapporté, puisque de ce fait le corps de valve joue le rôle de corps de mécanisme. Cela permet d'avoir une tenue mécanique optimale assurant une étanchéité optimale. Avantageusement, mais facultativement, la valve de gonflage selon l'invention présente au moins l'une des caractéristiques additionnelles suivantes :
- le siège est situé dans une zone de sollicitation limitée de la tubulure ;
- le siège est situé au voisinage d'un orifice de jante du pneu, lors d'un montage de la valve de gonflage ;
- le siège est situé au niveau de l'extrémité interne de la tubulure, de sorte à être positionné à l'intérieur du pneu lors d'un montage de la valve de gonflage ;
- le mécanisme de valve comprend des moyens de commande du clapet situés au niveau de l'extrémité externe de la tubulure ;
- le mécanisme de valve comporte une tige à clapet comprenant une tête formant le clapet comportant une garniture d'étanchéité agencée de sorte à coopérer de manière étanche avec le siège de la tubulure ;
- le mécanisme de valve comporte une tige à clapet comprenant une tête formant le clapet agencée de sorte à coopérer de manière étanche avec une garniture d'étanchéité agencée sur le siège de la tubulure ;
- le mécanisme de valve comporte des moyens de rappel en position fermée situés au niveau de l'extrémité externe de la tubulure ;
- les moyens de rappel comprennent un ressort ;
- le ressort comporte, à une extrémité, une première spire 4131 en appui sur un rebord d'appui de la tubulure dans le passage et, à une extrémité opposée, une spire en liaison avec clapet et une spire élargie de guidage et de stabilisation ; et
- la tige à clapet comporte un renflement coopérant avec la spire.

D'autres caractéristiques et avantages de l'invention apparaitront lors de la description ci-après d'un mode de réalisation de l'invention. Aux dessins annexés :
- La figure 1 est une vue tridimensionnelle d'une valve de gonflage selon l'invention ;
- La figure 2 est une vue de côté de la valve de gonflage de la figure 1 ;
- La figure 3 est une vue en coupe selon III-III de la valve de gonflage de la figure 2 ;
- La figure 4 est une vue en coupe d'une valve de gonflage sans boitier ;
- La figure 5 est une vue tridimensionnelle de la valve de gonflage de la figure 4 ;
- La figure 6 est une en coupe d'un deuxième mode de réalisation d'une valve de gonflage sans boitier ; et,
- La figure 7 est une vue tridimensionnelle de l'assemblage de la tige à clapet et des moyens de rappel.

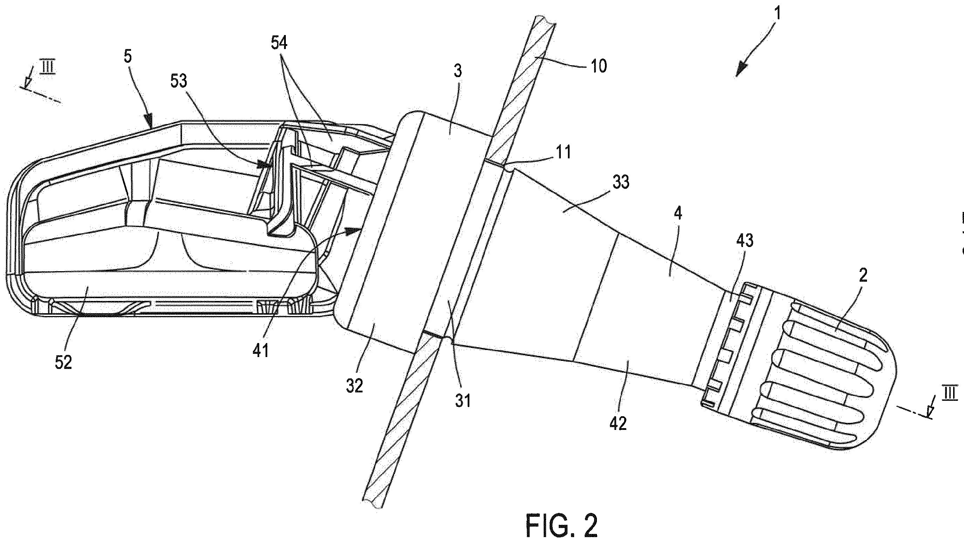

En remarque liminaire, il faut, dans le texte, comprendre par « interne » (INT) et « externe » (EXT) comme faisant référence à un positionnement à l'intérieur du pneu et à l'extérieur du pneu respectivement, par rapport à la jante comme indiqué dans les figures 2, 4 et 6.

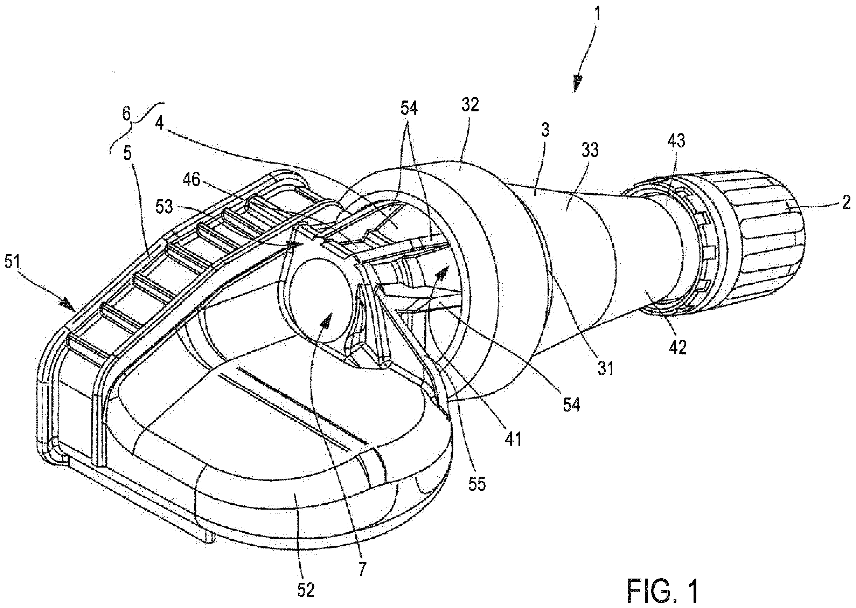

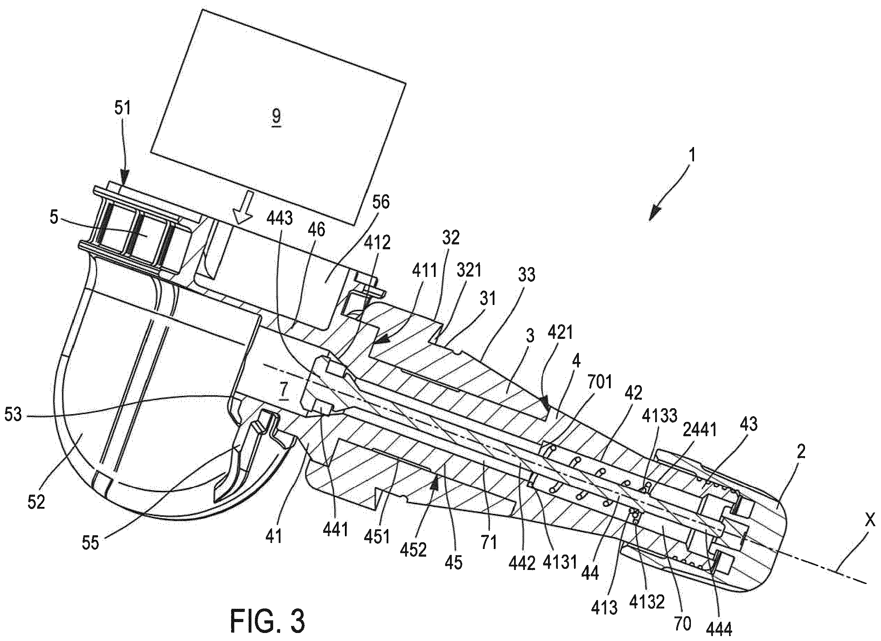

En référence aux figures 1 à 3, nous allons décrire un mode de réalisation d'une valve 1 de gonflage pour pneu selon l'invention. La valve 1 de gonflage pour pneu selon l'invention est, ici, une valve de type TPMS et de type « snap-in ». La valve 1 de gonflage pour pneu selon l'invention comporte une tubulure 4 qui définit un passage 7, 70,71 de forme cylindrique de révolution d'axe X et s'étendant depuis une extrémité interne 46 et une extrémité externe 43. La tubulure comporte, successivement depuis l'extrémité externe 43 vers l'extrémité interne 46 :
- des moyens de coopération pour la mise en place et le maintien d'un capuchon 2 de protection de l'extrémité externe 43 ; puis,
- une portion tronconique 42 en forme de sapin se terminant par un épaulement externe 421 ; puis,
- une portion 45 comportant un logement annulaire 452 délimité longitudinalement par l'épaulement externe 421 et un épaulement interne 411, une rainure annulaire 451 ; puis,
- une portion interne 41 comportant l'extrémité interne 46.

En parallèle, le passage 7,70,71 défini par la tubulure comporte, successivement depuis l'extrémité externe 43 vers l'extrémité interne 46 :
- une partie externe 70; puis
- une partie centrale 71 présentant un diamètre inférieur à un diamètre de la partie externe 70 et reliée à cette dernière par un rebord d'appui 701; puis
- une partie interne 7 de plus grand diamètre que la partie centrale 71 et reliée à celle-ci par un siège 412 tronconique.

La valve 1 de gonflage pour pneu selon l'invention comporte en outre un mécanisme de valve 44 positionné dans le passage 7,70,71. Le mécanisme de valve 44 comporte une tige à clapet 442. La tige à clapet 442 comprend une tête formant clapet 443 sur laquelle est agencée une garniture d'étanchéité 441. Une fois le mécanisme de valve en place dans la tubulure, la garniture d'étanchéité 441 vient en appui sur le siège 412 du passage 7,70,71, le mécanisme de valve 44 étant alors dans une position fermée empêchant au moins les fuites de gaz depuis l'extrémité interne. Cette position fermée du mécanisme de valve 44 est assurée par des moyens de rappel 413 comportant un ressort, ici. La garniture d'étanchéité 441 est réalisée en un polymère thermodurcissable, vulcanisable ou injectable, ou encore en un métal, sans que cela soit exhaustif. En variante de réalisation, la garniture d'étanchéité 441 est venue de matière avec la tête formant clapet 443. Selon une autre variante de réalisation, la garniture d'étanchéité est agencée sur le siège 412. Une fois monté dans le passage 7,70,71, le mécanisme de valve 44 présente la tête 443 de la tige à clapet 44 positionnée dans la partie interne 7 du passage 7,70,71, une queue 444 de la tige à clapet 44 passant à travers la partie centrale 71 pour s'étendre dans la partie externe 70 dans laquelle sont situés les moyens de rappel 413. De plus, la queue 444 de la tige à clapet 44 comporte un renflement 2441 situé dans la partie externe 70, à distance d'une extrémité libre de la queue 444. La queue 444 de la tige à clapet 44 et les moyens de rappel 413 forment des moyens de commande du clapet. Plus précisément, le ressort formant les moyens de rappel 413 présente une forme globalement cylindro-conique. Il comprend une première spire 4131 formant une grande base et présentant un diamètre sensiblement identique à au diamètre de la partie externe 70. Cette première spire 4131 est en appui sur le rebord 701 reliant la partie externe 70 du passage 7,70,71 à la partie centrale 71 de ce dernier. Le ressort comporte en outre une spire 4133 formant la petite base. La spire 4133 vient en appui sur le renflement 2441 de la queue 444 de la tige à clapet 44. Lors d'un montage du ressort sur la tige à clapet 44, le renflement 2441 est emmanché en force à travers la spire 4133. La spire 4133 se prolonge de manière concentrique par une spire élargie 4132 dont un diamètre est sensiblement identique au diamètre de la partie externe 70. Cette spire élargie 4132 est une spire de centrage et de stabilisation radiale dans la partie externe 70 de la tige à clapet 44.

Le mécanisme de valve 44 est plus amplement décrit dans le document WO 2016/174323 auquel il est possible de se référer pour de plus amples informations.

La valve 1 de gonflage pour pneu selon l'invention comporte en outre un élément élastique 3 reçu dans le logement annulaire 452. Cet élément élastique 3 entoure ainsi la portion 45 de la tubulure 71 et par conséquent la partie centrale 71 du passage. Depuis l'extrémité externe vers l'extrémité interne, l'élément élastique 3 comporte une partie tronconique 33 dont une extrémité externe vient en appui sur l'épaulement externe 421. La partie tronconique 33 vient dans le prolongement de la portion tronconique 42 de la tubulure 4. Puis l'élément élastique 3 comporte une surface annulaire d'étanchéité 31 se terminant vers l'extrémité interne par un épaulement 321. La surface annulaire d'étanchéité 31 est agencée de sorte à coopérer avec une ouverture de valve 11 aménagée dans une épaisseur d'une tôle de jante 10 de roue, comme illustré à la figure 2. Une fois l'élément élastique 3 en place dans le logement annulaire 452, la surface annulaire d'étanchéité 31 est au droit de la rainure annulaire 451 du logement annulaire 452. De manière astucieuse, la rainure annulaire 452 présente une largeur supérieure à une largeur de la surface annulaire d'étanchéité 31. Cette disposition permet à la matière de l'élément élastique 3 située radialement sous la surface annulaire d'étanchéité 31 de pouvoir migrer dans la rainure annulaire 451 une fois la valve 1 de gonflage pour pneu selon l'invention positionnée dans l'ouverture de valve 11. En effet pour assurer une étanchéité optimale, la surface annulaire d'étanchéité 31 présente un diamètre supérieur à un diamètre à l'ouverture de valve 11, la déformation de cette partie de l'élément élastique 3 ainsi rendue possible permet d'assurer une étanchéité optimale au niveau de ladite ouverture de valve 11. Ensuite, toujours vers l'extrémité interne, après l'épaulement 321, l'élément élastique 3 comporte une partie d'extrémité 32 venant entourer l'épaulement interne 411 du logement annulaire 452 ainsi qu'une partie de la portion interne 41 de la tubulure 4. Lors d'un montage de l'élément élastique 3 sur la tubulure 4, un diamètre intérieur de l'élément élastique 3 avant montage est inférieur à un diamètre de la tubulure dans sa portion 45. Ainsi, l'élément élastique 3 serre la tubulure 4 pour assurer une adhérence mécanique permettant :
- lors du montage de la valve 1 de gonflage pour pneu selon l'invention, de maintenir en tension l'élément élastique 3 qui, en s'allongeant, verra son diamètre externe au niveau d'une extrémité interne de la partie tronconique 33, puis de la surface annulaire d'étanchéité 31, se réduire pour passer dans l'orifice de valve 11 de la jante 10 ;
- d'assurer une partie de l'étanchéité ;
- de rendre efficace une retenue mécanique de la valve 1 de gonflage pour pneu selon l'invention.

Il est à noter que la structure permettant de déporter la partie étanchéité du mécanisme de valve 44 au niveau, ici, de l'extrémité interne 46 conduit à :
- disposer d'une épaisseur de matière compatible avec la compression requise pour le montage dans l'ouverture de valve 11 de la jante 10 tout en ayant une épaisseur de paroi de tubulure au niveau de la partie centrale 71 du passage compatible avec la résistance des matériaux injectés et une section de passage du gaz suffisante.
- Eviter un dégazage rapide avec un risque d'accident lors d'une casse au niveau de l'extrémité externe de la valve 1 de gonflage pour pneu selon l'invention, la partie étanchéité du mécanisme de valve 44 étant alors à l'intérieur (INT) du pneu.

La valve 1 de gonflage pour pneu selon l'invention comporte en outre une unité de communication sans fil 5. Cette unité de communication sans fil 5 comporte un boitier 52 comportant une ouverture latérale 51. L'unité de communication sans fil 5 comporte en outre, de manière connue en soi, un dispositif électronique 9, sous la forme d'une carte électronique par exemple, équipé notamment d'un capteur de pression et d'une électronique (circuit imprimé (PCB selon l'acronyme anglo-saxon pour « Printed Circuit Board ») et circuit intégré (ASIC selon l'acronyme anglo-saxon pour « Application-Specific Integrated Circuit »)) permettant la mesure et l'envoi d'informations à l'ordinateur de bord du véhicule automobile, ainsi qu'une source d'alimentation électrique. Le dispositif électronique 9 est introduit, de manière amovible dans une variante de réalisation, à l'intérieur 56 du boitier 52 par l'ouverture 51. Cette dernière est ensuite refermée. La possibilité d'avoir un dispositif électronique 9 amovible au sein du boitier est de permettre de réutiliser ledit dispositif électronique 9 dans une nouvelle valve 1 de gonflage pour pneu selon l'invention dans le cas d'un changement de valve par exemple Ici, le boitier 52 est situé sur l'extrémité interne 46 de la tubulure 4 de la valve 1 de gonflage pour pneu selon l'invention. Le boitier 52 est venu de matière avec la tubulure 4. Ainsi la tubulure 4 et le boitier 52 forment un ensemble monobloc en continuité de matière. Cet ensemble monobloc est obtenu simplement par moulage soit en matériau métallique (laiton par exemple), composite ou plus généralement plastique. Cela permet donc de réduire le nombre de pièces de la valve 1 de gonflage pour pneu selon l'invention, ainsi que sa masse. Cette réduction de masse de la valve 1 de gonflage pour pneu selon l'invention permet de diminuer, en utilisation, les efforts centrifuges et les contraintes induites qui coupe l'élément élastique 3, généralement en élastomère, avec les bords de l'orifice de valve 11 de la jante 10, ainsi que les besoins de masses d'équilibrage de la roue ainsi équipée d'une telle valve 1 de gonflage pour pneu selon l'invention.

La valve 1 de gonflage pour pneu selon l'invention comporte un élément de jonction 53 entre le boitier 52 et la tubulure 4. Cet élément de jonction 53 vient dans le prolongement de l'extrémité interne 46 de la tubulure 4 et s'étend en saillie depuis une paroi latérale du boitier 52. L'élément de jonction comporte des nervures de renfort 54,55 reliant l'élément de jonction 53 à la tubulure 4 et le boitier 52 respectivement. Une série de nervures de renfort 54 s'étendent sensiblement parallèlement à l'axe longitudinal X et relient en particulier l'élément de jonction 53 à la tubulure 4 au niveau de sa portion interne 41. Elles sont ici au nombre de trois et se répartissent sur une portion d'une périphérie externe de l'extrémité interne 46. D'autre part, une deuxième nervure de renfort 55 s'étend sensiblement perpendiculairement à l'axe longitudinal X de la tubulure 4, reliant l'élément de jonction 53 au boitier 52. Ces nervures de renfort 54,55 participent à la tenue dans le temps du boitier 52 sur la tubulure 4.

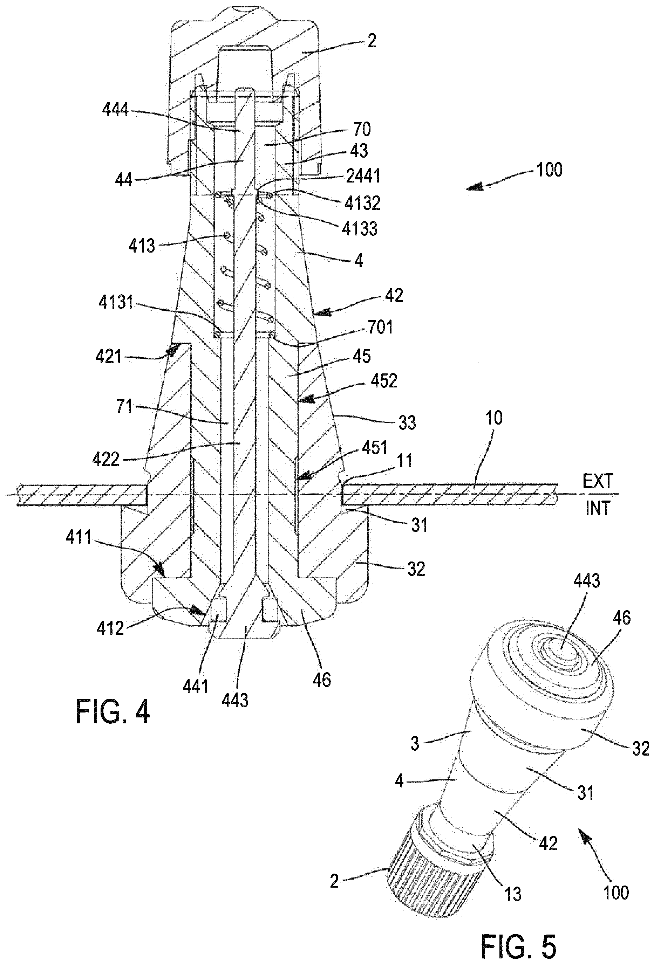

Aux figures 4 et 5, nous avons illustré une valve 100 de gonflage pour pneu de type « tubeless » et de type « snap-in ». Cette valve 100 de gonflage « tubeless » se différentie de la valve 1 de gonflage pour pneu selon l'invention précédemment décrite en ce que la valve 100 de gonflage « tubeless » ne comporte pas d'unité de communication sans fil, ni d'élément de jonction entre le boitier de l'unité de communication sans fil et la tubulure 4. Les autres éléments de la valve 100 de gonflage « tubeless » sont similaires à ceux équivalents de la valve 1 de gonflage pour pneu selon l'invention précédente. Nous ne les redécrirons pas plus avant. En particulier le mécanisme de valve 44 est identique ce qui permet de déporter la partie étanchéité du mécanisme de valve 44 au niveau de l'extrémité interne 46 de la tubulure 4. Ainsi la partie étanchéité du mécanisme de valve 44 est alors à l'intérieur (INT) du pneu, une fois la valve 100 de gonflage « tubeless » mise en place à travers la jante 10. De nouveau, entre autres, cela permet d'éviter un dégazage rapide avec un risque d'accident lors d'une casse au niveau de l'extrémité externe de la valve 100 de gonflage « tubeless ».

Selon des variantes de réalisation, les valves 1 et 100 précédemment décrites sont de type « clamp-in » au lieu de type « snap-in ».

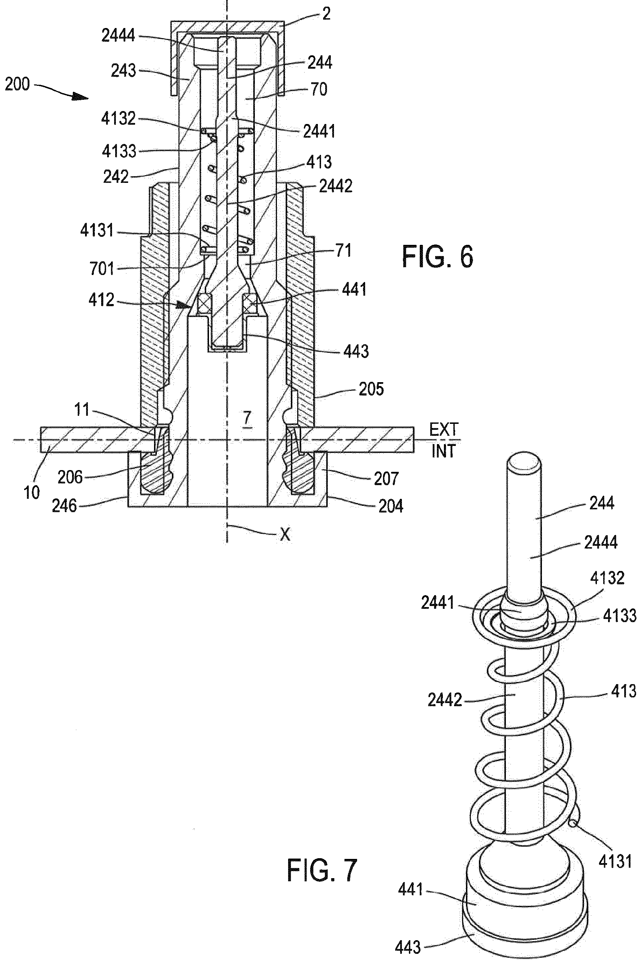

Aux figures 6 et 7, nous avons illustré une variante 200 de réalisation de la valve de gonflage pour pneu de type « clamp-in ». La valve 200 de gonflage « clamp-in » comporte une tubulure 204 dans laquelle est aménagé le passage 7,70,71. Un mécanisme de valve 244 est positionné dans le passage 7,70,71. Ce mécanisme de valve 244 est très similaire au mécanisme de valve 44 précédemment décrit. Le mécanisme de valve 244 comporte une tige à clapet 2442. La tige à clapet 2442 comprend une tête formant clapet 443 sur laquelle est agencée une garniture d'étanchéité 441. Une fois le mécanisme de valve 244 en place dans la tubulure, la garniture d'étanchéité 441 vient en appui sur le siège 412 du passage 7,70,71, le mécanisme de valve 244 étant alors dans une position fermée empêchant au moins les fuites de gaz depuis l'extrémité interne. Cette position fermée du mécanisme de valve 244 est assurée par les moyens de rappel 413 précédemment décrits. Une fois monté dans le passage 7,70,71, le mécanisme de valve 244 présente la tête 443 de la tige à clapet 244 positionnée dans la partie interne 7 du passage 7,70,71, une queue 2444 de la tige à clapet 244 passant à travers la partie centrale 71 pour s'étendre dans la partie externe 70 dans laquelle sont situés les moyens de rappel 413. De plus, la queue 2444 de la tige à clapet 244 comporte un renflement 2441 situé dans le partie externe 70, à distance d'une extrémité libre de la queue 2444. La queue 2444 de la tige à clapet 244 et les moyens de rappel 413 forment des moyens de commande du clapet.

D'autre part, la valve 200 de gonflage « clamp-in » comporte une moyen d'étanchéité 206 retenu dans un logement 207 situé à l'extrémité interne 246. Au montage, le logement 207 se trouve à l'intérieur du pneu, le moyen d'étanchéité 206 venant réalisé l'étanchéité entre une périphérie de l'orifice 11 de la jante 10 et la tubulure 204. De plus, un écrou de serrage 205, monté par l'extérieur, permet de maintenir en place La valve 200 de gonflage « clamp-in » sur la jante 10.

Il est à noter que la structure permettant de déporter la partie étanchéité du mécanisme de valve 244 permet d'éviter un dégazage rapide avec un risque d'accident lors d'une casse au niveau de l'extrémité externe de la valve 200 de gonflage pour pneu selon l'invention, la partie étanchéité du mécanisme de valve 244 étant alors dans une zone à sollicitation mécanique limitée 242,246 de la tubulure 204, en dehors d'une zone de casse située au niveau de l'extrémité externe 243 de la valve 200. Cette zone de casse correspond à la partie de la tubulure 204 située au niveau l'extrémité externe 243 de la valve 200 de gonflage pour pneu selon l'invention sur laquelle est mis en place le capuchon 2 et où vient se connecter un embout d'un gonfleur. La partie de la tubulure de la valve 200 de gonflage pour pneu selon l'invention située entre l'extrémité interne 246 et la zone de casse est la zone à sollicitation mécanique limitée. En particulier, selon une variante de réalisation, la partie étanchéité est positionnée au voisinage de l'orifice 11 de montage de la valve 200 dans la jante 10. Il entendu ici par « au voisinage de l'orifice 11 » que la partie étanchéité se situe entre la zone de casse de l'extrémité externe 243 de la valve 200 et une position au droit de l'orifice 11 mais en étant plus proche de ladite position au droit de l'orifice 11 que de la zone de casse de l'extrémité externe 243 de la valve 200.

Selon une variante de réalisation, la valve 200 de gonflage pout pneu selon l'invention qui vient d'être décrite est de type « snap-in ».

Il est à noter que le mécanisme de valve 244 est utilisable dans les valves 100 et 1 précédemment décrites. De plus, les zones de casse et à sollicitation mécanique limitée sont définies de manière similaire pour les valves 1 et 100 selon l'invention. de même, le mécanisme de valve 44 est utilisable dans la valve 200 précédente.

Il est à noter qu'une telle structure de valve 1,100,200 de gonflage pour pneu selon l'invention permet de réaliser une tubulure 4, 204 qui présente une partie externe 70 dont le diamètre est plus faible que le diamètre nécessaire pour réaliser le taraudage de réception d'un mécanisme de valve de l'art antérieur, puisque la profondeur de filet dudit taraudage non nécessaire est récupérée pour obtenir une épaisseur de matière significativement plus élevée au niveau de la partie externe 70, et en particulier dans la zone de casse de l'extrémité externe de la valve, donc une résistance mécanique accrue. Cela s'ajoute à l'éloignement de l'extrémité externe de la valve de la partie étanchéité du mécanisme de valve 44,244 décrit précédemment.

Accessoirement, une telle structure de valve 1,100,200 de gonflage pour pneu selon l'invention permet d'augmenter les débits possibles de gonflage et de dégonflage du fait de l'absence de mécanisme de valve vissé de l'art antérieure venant réduire d'autant le passage dans la tubulure.

D'autre part, une telle structure de valve 1,100,200 de gonflage pour pneu selon l'invention permet de s'affranchir des contraintes de serrage nécessaires au mécanisme de valve de l'art antérieur. Cela permet de réalisé une tubulure 4, 244 dans un large éventail de matières comme par exemple en métal (aluminium, laiton, acier, acier inoxydable...) ou en plastique (polyamide, polyoxyméthylène, Polysulfure de phénylène, Polyphthalamide, Polyimide, Polyamide-imide, etc...) chargé ou non, sans que cela soit exhaustif.

Bien entendu, il est possible d'apporter de nombreuses modifications à l'invention sans pour autant sortir du cadre de celle-ci.

## Revendications

1. Valve (1,100,200) de gonflage pour pneu comportant une tubulure (4,204) définissant un passage (7, 70, 71) et ayant une extrémité interne (46,246) et une extrémité externe (43,243), un mécanisme de valve (44,244) positionnée dans le passage, le mécanisme de valve comportant un clapet (443) et un siège (412) agencés de sorte à coopérer de manière étanche l'un avec l'autre le siège est agencé sur la tubulure dans le passage, **caractérisé en ce que** le siège est situé dans une zone de sollicitation limitée (42, 45, 46, 242, 246) de la tubulure et **en ce que** le siège est situé au niveau de l'extrémité interne de la tubulure, de sorte à être positionné à l'intérieur du pneu lors d'un montage de la valve de gonflage.

2. Valve de gonflage selon la revendication 1, **caractérisée en ce que** le siège est situé au voisinage d'un orifice (11) de jante (10) du pneu, lors d'un montage de la valve de gonflage.

3. Valve de gonflage selon l'une des revendications 1 ou 2, **caractérisée en ce que** le mécanisme de valve comprend des moyens de commande (442,413, 2442) du clapet situés au niveau de l'extrémité externe de la tubulure.

4. Valve de gonflage selon l'une des revendications 1 à 3, **caractérisée en ce que** le mécanisme de valve comporte une tige à clapet (442,2442) comprenant une tête formant le clapet (443) comportant une garniture d'étanchéité (441) agencée de sorte à coopérer de manière étanche avec le siège (412) de la tubulure.

5. Valve de gonflage selon l'une des revendications 1 à 4, **caractérisée en ce que** le mécanisme de valve comporte une tige à clapet (442,2442) comprenant une tête formant le clapet (443) agencée de sorte à coopérer de manière étanche avec une garniture d'étanchéité (441) agencée sur le siège (412) de la tubulure.

6. Valve de gonflage selon l'une des revendications 1 à 5, **caractérisée en ce que** le mécanisme de valve comporte des moyens de rappel (413) en position fermée situés au niveau de l'extrémité externe de la tubulure.

7. Valve de gonflage selon la revendication 6, **caractérisée en ce que** les moyens de rappel comprennent un ressort.

8. Valve de gonflage selon la revendication 7 **caractérisée en ce que** le ressort comporte, à une extrémité, une première spire (4131) en appui sur un rebord d'appui (701) de la tubulure dans le passage et, à une extrémité opposée, une spire (4133) en liaison avec le clapet et une spire élargie (4132) de guidage et de stabilisation.

9. Valve de gonflage selon la revendication 8 prise en combinaison avec la revendication 5, **caractérisée en ce que**, la tige à clapet (442, 2442) comporte un renflement (2441) coopérant avec la spire (4133) en liaison avec le clapet (443).

## Patentansprüche

1. Reifenventil (1, 100, 200), umfassend einen Schlauch (4, 204), der einen Durchgang (7, 70, 71) definiert und ein inneres Ende (46, 246) und ein äußeres Ende (43, 243) aufweist, einen Ventilmechanismus (44, 244), der in dem Durchgang angeordnet ist, wobei der Ventilmechanismus eine Klappe (443) und einen Sitz (412) umfasst, die so angeordnet sind, dass sie abdichtend miteinander zusammenwirken, wobei der Sitz an dem Schlauch in dem Durchgang angeordnet ist, **dadurch gekennzeichnet, dass** der Sitz in einem Bereich begrenzter Spannung (42, 45, 46, 242, 246) des Schlauchs angeordnet ist und dass der Sitz am inneren Ende des Schlauchs angeordnet ist, so dass er innerhalb des Reifens positioniert ist, wenn das Reifenventil montiert ist.

2. Reifenventil nach Anspruch 1, **dadurch gekennzeichnet, dass** sich der Sitz in der Nähe einer Öffnung (11) einer Felge (10) des Reifens befindet, wenn das Reifenventil montiert ist.

3. Reifenventil nach einem der Ansprüche 1 oder 2, **dadurch gekennzeichnet, dass** der Ventilmechanismus Steuermittel (442, 413, 2442) der Klappe umfasst, die am äußeren Ende des Schlauchs angeordnet sind.

4. Reifenventil nach einem der Ansprüche 1 bis 3, **dadurch gekennzeichnet, dass** der Ventilmechanismus einen Klappenschaft (442, 2442) umfasst, der einen Kopf umfasst, der die Klappe (443) bildet, umfassend eine Dichtung (441), die zur Zusammenwirkung abdichtend mit dem Sitz (412) des Schlauchs geignet ist.

5. Reifenventil nach einem der Ansprüche 1 bis 4, **dadurch gekennzeichnet, dass** der Ventilmechanismus einen Klappenschaft (442, 2442) umfasst, der einen Kopf umfasst, der die Klappe (443) bildet, zur Zusammenwirkung abdichtend mit einer Dichtung (441), die auf dem Sitz (412) des Schlauchs angeordnet ist, geignet ist.

6. Reifenventil nach einem der Ansprüche 1 bis 5, **dadurch gekennzeichnet, dass** der Ventilmechanismus Mittel zum Rückstellen (413) in die geschlossene Position umfasst, die sich am äußeren Ende des Schlauchs befinden.

7. Reifenventil nach Anspruch 6, **dadurch gekennzeichnet, dass** die Rückstellmittel eine Feder umfassen.

8. Reifenventil nach Anspruch 7, **dadurch gekennzeichnet, dass** die Feder an einem Ende eine erste Windung (4131), die auf einem Lagerrand (701) des Schlauchs im Durchgang aufliegt, und an einem gegenüberliegenden Ende eine mit der Klappe verbundene Windung (4133) und eine vergrößerte Windung (4132) für Führung und Stabilität aufweist.

9. Reifenventil nach Anspruch 8 in Verbindung mit Anspruch 5, **dadurch gekennzeichnet, dass** der Klappenschaft (442, 2442) einen Wulst (2441) aufweist, der mit der Windung (4133) in Verbindung mit der Klappe (443) zusammenwirkt.

## Claims

1. Tyre inflation valve (1, 100, 200) including a tubular body (4, 204) defining a passage (7, 70, 71) and having an inside end (46, 246) and an outside end (43, 243), a valve mechanism (44, 244) positioned in the passage, the valve mechanism including a valve shutter (443) and a seat (412) arranged so as to engage in an airtight manner with one another, the seat is arranged on the tubular body in the passage, **characterised in that** the seat is located in an area of limited solicitation (42, 45, 46, 242, 246) of the tubular body and **in that** the seat is located at the inside end of the tubular body, so as to be positioned inside the tyre when assembling the inflation valve.

2. Inflation valve according to claim 1, **characterised in that** the seat is located in the vicinity of an orifice (11) of the tyre rim (10) during assembly of the inflation valve.

3. Inflation valve according to any of claims 1 or 2, **characterised in that** the valve mechanism comprises control means (442, 413, 2442) for controlling the valve shutter which are located at the outside end of the tubular body.

4. Inflation valve according to any of claims 1 to 3, **characterised in that** the valve mechanism includes a valve stem (442, 2442) comprising a head forming the valve shutter (443) including a sealing member (441) arranged so as to engage in an airtight manner with the seat (412) of the tubular body.

5. Inflation valve according to any of claims 1 to 4, **characterised in that** the valve mechanism includes a valve stem (442, 2442) comprising a head forming the valve shutter (443) arranged so as to engage in an airtight manner with a sealing member (441) arranged on the seat (412) of the tubular body.

6. Inflation valve according to any of claims 1 to 5, **characterised in that** the valve mechanism includes return means (413) for returning to the closed position which are located at the outside end of the tubular body.

7. Inflation valve according to claim 6, **characterised in that** the return means comprise a spring.

8. Inflation valve according to claim 7, **characterised in that** the spring includes, at one end, a first coil (4131) bearing against a bearing edge (701) of the tubular body in the passage and, at an opposite end, a coil (4133) connected to the valve shutter and a widened guiding and stabilisation coil (4132).

9. Inflation valve according to claims 5 and 8, **characterised in that** the valve stem (442, 2442) includes a bulge (2441) engaging with the coil (4133) in connection with the shutter (443).
